# EUROPEAN PATENT APPLICATION

(11) **EP 2 796 991 A2**
(43) Date of publication of application: **29.10.2014**
(21) Application number: 14165442.6
(22) Date of filing: 22.04.2014
(51) Int. Cl.: G06F 9/38

(54) **Processor for batch thread processing, batch thread processing method using the same, and code generation apparatus for batch thread processing**

(30) Priority: 22.04.2013 KR 20130044435
(71) Applicant: Samsung Electronics Co., Ltd, Gyeonggi-do 443-742 (KR)
(72) Inventor: Chung, Moo-Kyoung, Gyeonggi-do (KR); Ryu, Soo-Jung, Gyeonggi-do (KR); Cho, Yeon-Gon, Gyeonggi-do (KR)
(74) Representative: Portch, Daniel

(57) **Abstract**

A processor for batch thread processing includes a central register file, and one or more function unit batches each including two or more function units and one or more ports to access the central register file. The function units of the function unit batches execute an instruction batch including one or more instructions to sequentially execute the one or more instructions in the instruction batch.

## Description

### FIELD OF THE INVENTION

Methods and apparatuses consistent with exemplary embodiments relate to a processor for batch thread processing, a batch thread processing method using the processor, and a code generation apparatus for supporting the batch thread processing processor.

### BACKGROUND OF THE INVENTION

A coarse grain reconfigurable array (CGRA) refers to hardware having a plurality of function units (FU) in the form of an array. The CGRA is used to speed up an operation. Further, the CGRA can maximize throughput even if a dependency is present between data by use of software pipeline technology. However, all scheduling of data processing is performed in a compile stage, which increases a compile time. In addition, when implementing multithreads, hardware overhead is large, so that operation efficiency is degraded when performing an operation having a large, undefined delay time, for example, a memory access.

As another example, a single instruction multiple thread (SIMT) is an architecture including a plurality of function units similar to the CGRA. The SIMT uses a single instruction processed by the plurality of function units while executing a single thread processed by each function unit. According to the SIMT, the plurality of function units process a large amount of data in the same instruction sequence, providing a benefit to a massive parallel data processing application that needs to process a large amount of data in the same process. In addition, the SIMT provides superior processing efficiency through thread switching that executes a different thread when operation latency is high. However, in a case when a dependency between each data is present in the data processing, the thread processing is difficult.

### SUMMARY OF THE INVENTION

According to an expect of an exemplary embodiment, a processor may include a central register file and a first function unit batch including a first plurality of function units, a first input port through which the first plurality of function units access the central register file, and a first output port through which the first plurality of function units access the central register file; and a second function unit batch including a second plurality of function units, a second input port through which the second plurality of function units access the central register file, and a second output port through which the second plurality of function units access the central register file, wherein the first function unit is configured to receive a first instruction batch including one or more first instructions of a program and sequentially execute the one or more first instructions and the second function unit is configured to receive a second instruction batch including one or more second instructions of the program and sequentially execute the one or more second instructions.

The first function unit batch may further include one or more first local register files configured to store input/output data of the first plurality of function units, and the second function unit batch may further include one or more second local register files configured to store input/output data of the second plurality of function units.

The first function unit batch may be configured to operate as a coarse grained reconfigurable array (CGRA) by use of the first plurality of function units, connections between the first plurality of function units, and the one or more first local register files, and the second function unit batch may be configured to operate as a CGRA by use of the second plurality of function units, connections between the second plurality of function units, and the one or more second local register files.

A structure of the first function unit batch may be the same as a structure of the second function unit batch.

The first plurality of function units may be configured to process the one or more first instructions, and the second plurality of function units may be configured to process the one or more second instructions.

The first function unit batch may be configured to execute, during a certain cycle, at least one of the at least one or more second instructions by use of skewed instruction batch information, and the second function unit batch may be configured to execute, during a certain cycle, at least one of the at least one or more first instructions by use of skewed instruction batch information.

The first instruction batch may include a first plurality of instruction batches and the second instruction batch may include a second plurality of instruction batches, and the first function unit batch, upon receiving the first plurality of instruction batches, may be configured to sequentially execute each of the first plurality of instruction batches in a unit of a thread group including one or more threads and the second function unit batch, upon receiving the second plurality of instruction batches, may be configured to sequentially execute each of the second plurality of instruction batches in the unit of the thread group.

The first function unit batch and the second function unit batch may be configured to execute, if a block occurs at a certain thread during execution of the thread group with respect to an instruction batch and the block continues to a point when executing the thread group with respect to another instruction batch having a dependency on the instruction batch, executes the certain thread, at which the block occurs, with respect to the other instruction batch in a last order in the thread group.

The first function unit batch and the second function unit batch may be configured to, if a conditional branch occurs during execution of the thread group with respect to an instruction batch, divides the thread group into two or more sub-thread groups and executes the divided two or more sub-thread groups with respect to branches for the conditional branch, respectively.

The first function unit batch and the second function unit batch may be configured to, if the branches for the conditional branch end and merge, merge the divided two or more sub-thread groups to the thread group and execute the thread group.

According to an aspect of an exemplary embodiment, a processor may include a first function unit batch including a first plurality of function units, a first input port through which the first plurality of function units access the central register file, and a first output port through which the first plurality of function units access the central register file; a second function unit batch including a second plurality of function units, a second input port through which the second plurality of function units access the central register file, and a second output port through which the second plurality of function units access the central register file; and skewed registers assigned to each of the first plurality of function units and the second plurality of function units, wherein a skewed instruction that is to be executed during a certain cycle is generated by use of an instruction that is stored in a batch instruction memory through one of the skewed registers, and the generated skewed instruction is transmitted to each function unit assigned to the one of the skewed registers.

According to another aspect of an exemplary embodiment, there is provided an apparatus for generating a code including a program analysis unit configured to analyze a predetermined program that is to be processed in a processor including a first function unit batch including a first plurality of function units and a second function unit batch including a second plurality of function units; and an instruction batch generation unit configured to generate a first instruction batch and a second instruction batch, each including one or more instructions, which are to be respectively executed in the first function unit batch and the second function unit batch, based on a result of the analysis.

According to another aspect of an exemplary embodiment, there is provided a method of processing a batch thread by a processor including inputting a first instruction batch and a second instruction batch generated by a code generation apparatus into a first function unit batch including a first plurality of function units and a second function unit batch including a second plurality of function units; and sequentially executing, by first function unit batch and the second function unit batch, the first instruction batch and the second instruction batch, respectively.

The above and other aspects will be apparent from the following detailed description, the drawings, and the claims.

### BRIEF DESCRIPTION OF THE EMBODIMENTS

FIG. 1 is a diagram illustrating a processor in accordance with an exemplary embodiment of the present disclosure.
FIG. 2 is a control flow graph of a program in accordance with an exemplary embodiment.
FIG. 3 is a drawing illustrating a procedure of executing the program of FIG. 2 in a general SIMT architecture.
FIGS. 4A to 4C are drawings illustrating a procedure of executing the program of FIG. 2 in a general CGRA.
FIGS. 5A and 5B are drawings illustrating a procedure of executing the program of FIG. 2 in a processor in accordance with an exemplary embodiment of the present disclosure.
FIGS. 6A and 6B are drawings illustrating skewed instructions input in function unit batches of the processor in accordance with an exemplary embodiment of the present disclosure.
FIG. 7A is a drawing illustrating a processor for input of skewed instructions in accordance with another exemplary embodiment of the present disclosure.
FIG. 7B is a drawing illustrating a processor for input of skewed instructions in accordance with still another exemplary embodiment of the present disclosure.
FIG. 8 is a block diagram illustrating a code generation apparatus for supporting a processor for batch thread processing in accordance with an exemplary embodiment of the present disclosure.
FIG. 9 is a flowchart showing a method of processing a batch thread using a processor for batch thread processing in accordance with an exemplary embodiment of the present disclosure.
Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION OF THE DRAWINGS

The following description is provided to assist the reader in gaining a comprehensive understanding of the methods, apparatuses, and/or systems described herein. Accordingly, various changes, modifications, and equivalents of the methods, apparatuses, and/or systems described herein will suggest themselves to those of ordinary skill in the art. Also, descriptions of well-known functions and constructions may be omitted for increased clarity and conciseness. In addition, terms described below are terms defined in consideration of functions in the present disclosure and may be changed according to the intention of a user or an operator or conventional practice. Therefore, the definitions must be based on contents throughout this disclosure.

Hereinafter, exemplary embodiments of a processor for batch thread processing, a method of processing a batch thread using the processor, and a code generation apparatus for batch thread processing will be described in detail with reference to accompanied drawings.

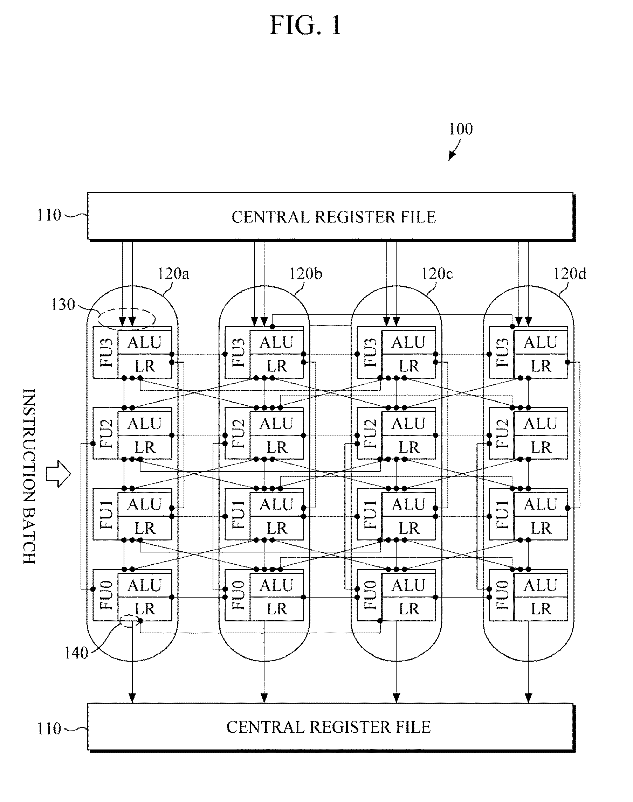

FIG. 1 is a diagram illustrating a processor in accordance with an exemplary embodiment of the present disclosure.

Referring to FIG. 1, a processor 100 in accordance with an exemplary embodiment of the present disclosure includes a central register file 110 and one or more function unit batches 120a, 120b, 120c, and 120d. Although the central register file 110 is separately illustrated at both an upper portion and a lower portion on FIG. 1, for convenience sake of description of an input port 130 and an output port 140 of the respective function unit batches 120a, 120b, 120c, and 120d, the processor 100 does not include two central register files 110.

Each of the function unit batches 120a, 120b, 120c, and 120d includes two or more function units FU0, FU1, FU2, and FU3. Each of the function unit batches 120a, 120b, 120c, and 120d includes one or more input ports 130 and one or more output ports 140, and accesses the central register file 110 through the one or more input ports 130 and the one or more output ports 140. The function unit batches 120a, 120b, 120c, and 120d may perform communication, such as data sharing, with one another through the central register file 110.

Each of the function unit batches 120a, 120b, 120c, and 120d may include one or more local register files (LR). The local register file LR may be included in one or more of the function units, and is used as a storage space for input/output data of the function unit, and operate in a first in first output (FIFO) fashion.

The processor 100 in accordance with an exemplary embodiment of the present disclosure may operate as a coarse grain reconfigurable array (CGRA) by use of the function units included in the function unit batches, the connections between the function units, and the local register file LR of the function units. In addition, the processor 100 may operate as a single instruction multiple thread (SIMT) by use of two or more function unit batches 120a, 120b, 120c, and 120d, each of which including two or more function units FU0, FU1, FU2, and FU3.

The function unit batches 120a, 120b, 120c, and 120d may have the same structure. The function units FU0, FU1, FU2, and FU3 included in each of the function unit batches 120a, 120b, 120c, and 120d may have different structures from one another. However, it is not necessary that the function units FU0, FU1, FU2, and FU3 included in each of the function unit batches 120a, 120b, 120c, and 120d have the different structures from one another, and depending on requirement, two or more function units may have the same structure.

For example, the function unit batches 120a, 120b, 120c, and 120d may include the function units FU0, FU1, FU2, and FU3 to have an equal computing power. Here, the computing power may represent an operation that is performed by the function unit, for example add, subtract, multiply, and divide, and each of the function unit batches 120a, 120b, 120c, and 120d may have such computing power by including a function unit that performs the same operation. As such, the processor 100 in accordance with an exemplary embodiment of the present disclosure operates as an SIMT through the function unit batches 120a, 120b, 120c, and 120d each having the same computing power, thereby supporting massive parallel data thread processing.

A general processor has one or more input ports and one or more output ports at an arithmetic logic unit (ALU) of each function unit so as to access a central register file, but the processor 100 in accordance with an exemplary embodiment of the present disclosure has one or more input ports 130 and one or more output ports 140 for each of the function unit batches 120a, 120b, 120c, and 120d so as to access the central register file 110, so that the overhead occurring when accessing the central register file 110 is reduced and thus the performance of the processor 100 is improved.

For example, if a general processor provided with eight function units has two input ports and one output port for each function unit, access to a central register file is achieved through sixteen input ports and eight output ports. In contrast, if the processor 100 in accordance with an exemplary embodiment of the present disclosure includes eight function units in a way that four function units are included in each of the two function unit batches, and each of the function unit batches has two input ports and one output port, access to the central register file is achieved through four input ports and two output ports, thereby reducing the overhead for the input and output operations.

Each of the function unit batches 120a, 120b, 120c, and 120d may execute one or more instruction batches that are generated through compiling. In this case, each of the instruction batches may include one or more instructions, and the respective instructions may be sequentially executed by function units, corresponding to the respective instructions.

Meanwhile, the function unit batches 120a, 120b, 120c, and 120d may execute one or more input instruction batches in units of thread groups each including one or more threads.

In this case, if a block occurs at a certain thread while the function unit batches 120a, 120b, 120c, and 120d are executing a predetermined thread group with respect to a certain instruction batch, and the block is not released until a thread of the predetermined thread group is executed with respect to another instruction batch having a dependency on the instruction batch, at which the block occurs, the function unit batches 120a, 120b, 120c, and 120d do not execute the thread, at which the block occurs, with respect to the other instruction batch such that the thread, at which the block occurs, is executed at the last point of time terminating the execution of all the threads of the predetermined thread group.

In this manner, all the threads connected to a thread that is blocked in the middle of executing an instruction batch are prevented from being blocked, so that the processing efficiency is enhanced.

If a conditional branch occurs while the function unit batches 120a, 120b, 120c, and 120d are executing a thread group with respect to a certain instruction batch, the thread group is divided into two or more sub-thread groups, and the divided sub-thread groups are executed with respect to branches for the conditional branch, respectively. In addition, if the conditional branch for the respective branches ends and the branches merge, the divided sub-thread groups are merged into the original thread group.

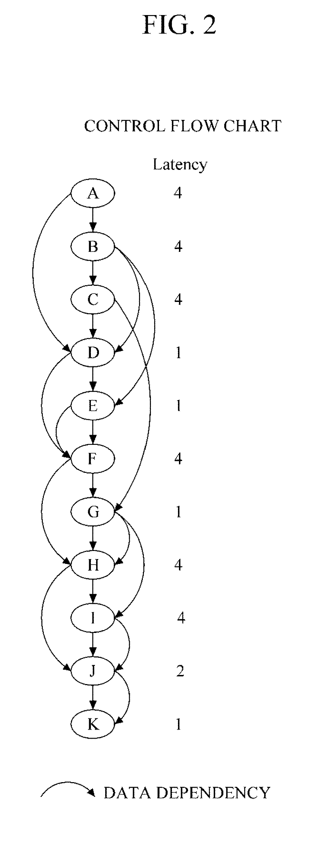

FIG. 2 is a control flow graph of a program executing a procedure of processing a batch thread in the processor 100 in accordance with an exemplary embodiment of FIG. 1. In FIG. 2, eleven instructions A to K are executed while having a predetermined data dependency on one another, such that an instruction having a data dependency on another instruction is executed after execution of the other instruction. In this case, latency represents cycles taken to perform each instruction A to K.

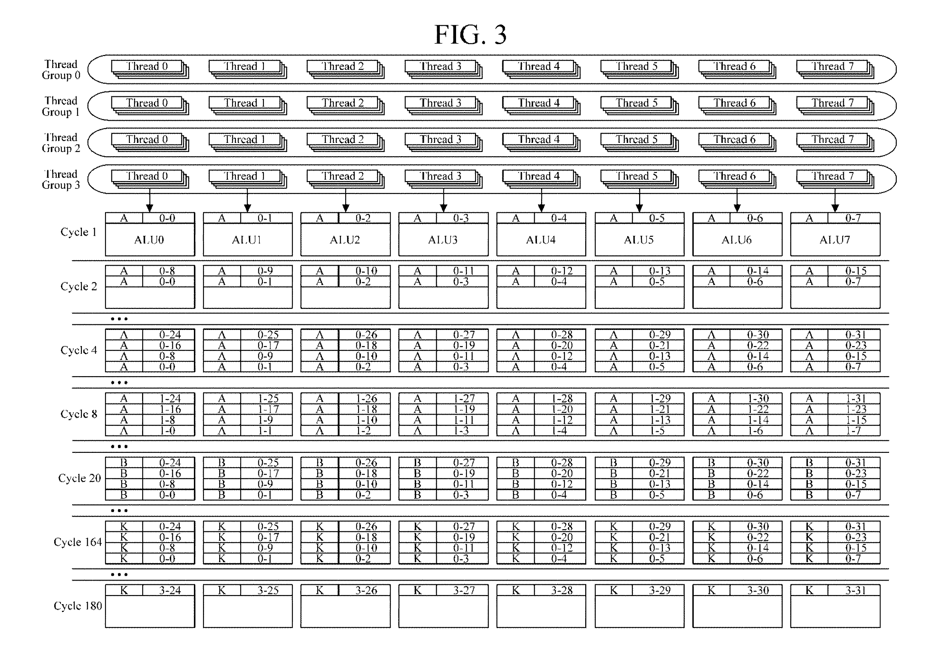

FIG. 3 is a drawing illustrating a procedure of executing the program of FIG. 2 in a general SIMT architecture. When 128 pieces of data are processed by different threads, respectively, a total of 128 threads need to be processed. It may be assumed that a general SIMT having eight ALUs (ALU0 to ALU7) divides 128 threads into four thread groups each including 32 threads, and allows the four thread groups to be executed with respect to a total of 11 instructions A to K. In this case, in order for the general SIMT to smoothly operate, each instruction A to K is set to have latency of 4, and the SIMT sequentially executes the four thread groups with respect to the instructions A to K starting from an instruction A to K as shown in FIG. 3. A total of 180 cycles is taken.

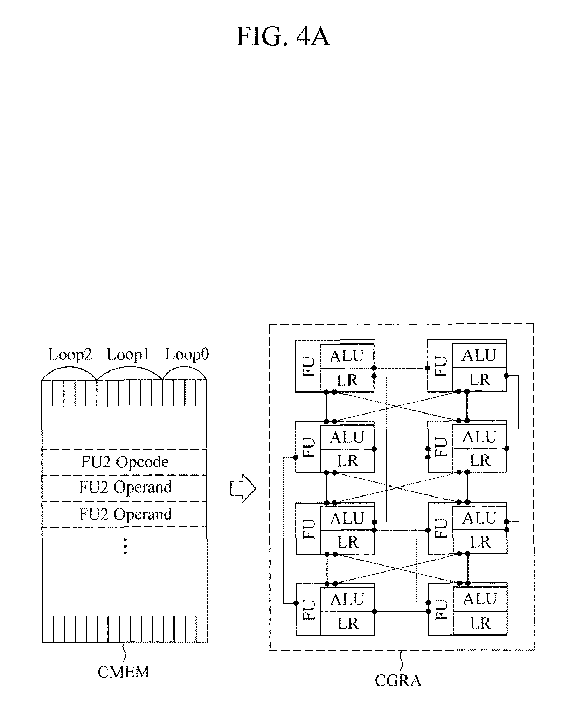

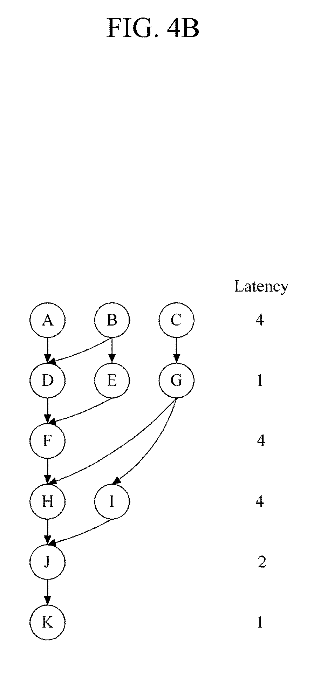

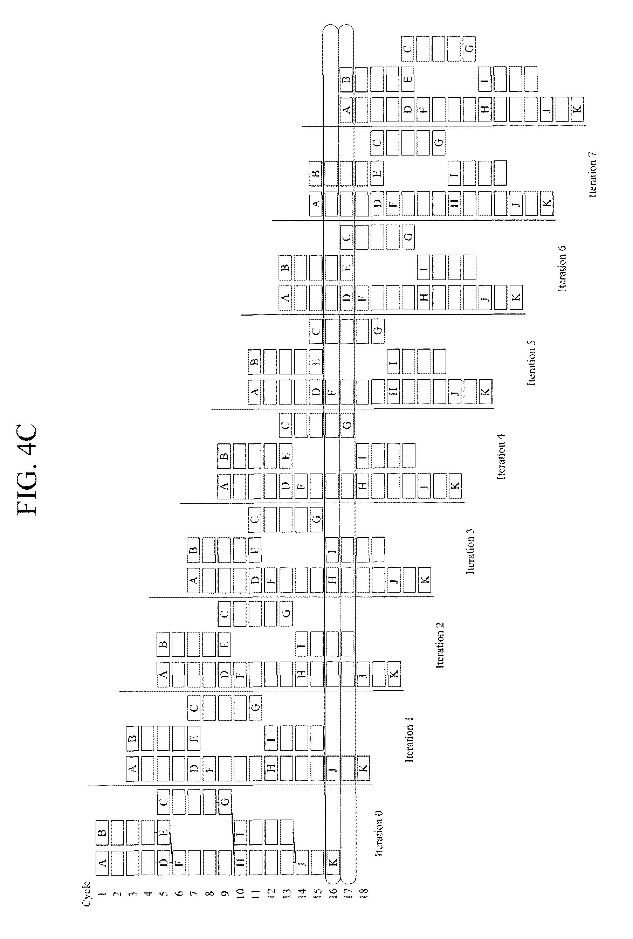

FIGS. 4A to 4C are drawings illustrating a procedure of executing the program of FIG. 2 in a general CGRA. FIG. 4A shows an example of a general CGRA having the same number of function units as the SIMT of FIG. 3, and instructions are input from a configuration memory or a cache memory CMEM. FIG. 4B shows an example of the program of FIG. 2 that is scheduled so as to be executed in the CGRA of FIG. 4A. FIG. 4C shows an example of executing eleven instructions A to K scheduled as shown in FIG. 4B.

In this case, an iteration of the CGRA corresponds to a thread of the SIMT, and 128 iterations are performed to process a total of 128 threads as described in FIG. 3. Referring to FIG. 4B, to perform one iteration with respect to 11 instructions A to K, latency of 16 cycles is required. Referring to FIG. 4C, when a total of 128 iterations is performed, while having an initiation interval (II) of 2, a total of 272 cycles is required.

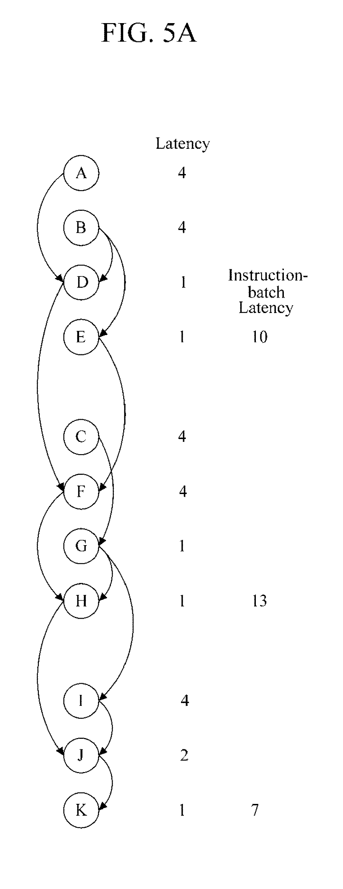

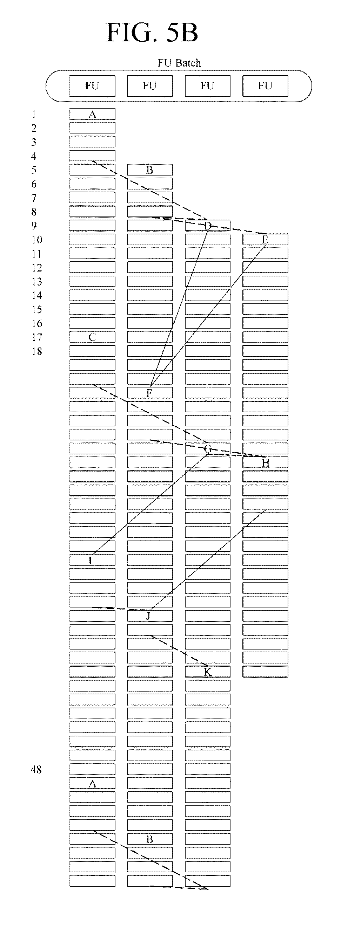

FIGS. 5A and 5B are drawings illustrating a procedure of executing the program of FIG. 2 in the processor 100 in accordance with an exemplary embodiment of the present disclosure.

FIG. 5A shows three instruction batches generated in a compile stage such that the exemplary program of FIG. 2 is executed in the processor 100, in which an instruction batch 0 includes four instructions A, B, D, and E, an instruction batch 1 includes four instructions C, F, G, and H, and an instruction batch 2 includes the final three instructions I, J, and K.

FIG. 5B shows, in a case when the processor 100 has two function unit batches each including four function units, three instruction batches that are sequentially executed by one of the function unit batches. Each instruction in an instruction batch is executed by a respective function unit in the function unit batch. Data movement in an instruction batch is achieved through interconnection with a local register file in a function unit batch, and data movement between instruction batches is achieved through the central register file 110.

When a total of 128 threads are processed similar to the matter illustrated in FIG. 3, each of the two function unit batches executes 64 threads with respect to three instruction batches, so that a total of 202 cycles is required. For example, when 128 threads are scheduled in units of 16 threads, one of the function unit batches sequentially executes three instructions while switching 16 threads in an interleaved scheme. That is, an input instruction batch is executed with respect to 16 threads, the next instruction batch is executed with respect to the 16 threads, and the last instruction batch is also executed with respect to the 16 threads. Thereafter, the three instruction batches are again executed with respect to 16 new threads, starting from the first instruction batch, in which way all the threads are processed. In this case, the execution for 128 threads is performed by the two function unit batches, and a total of 202 cycles is required.

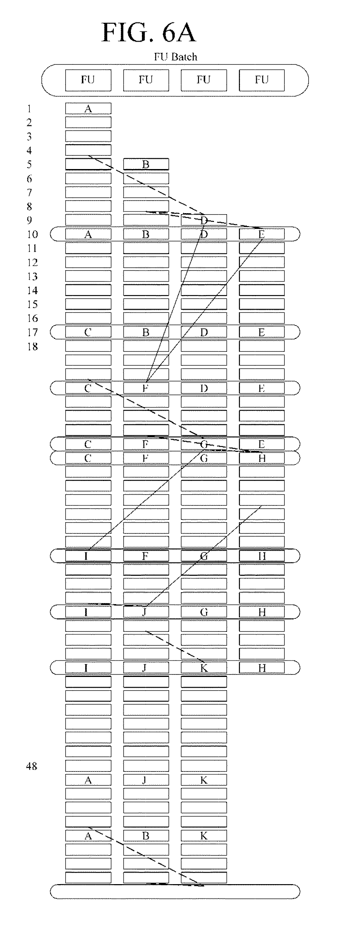

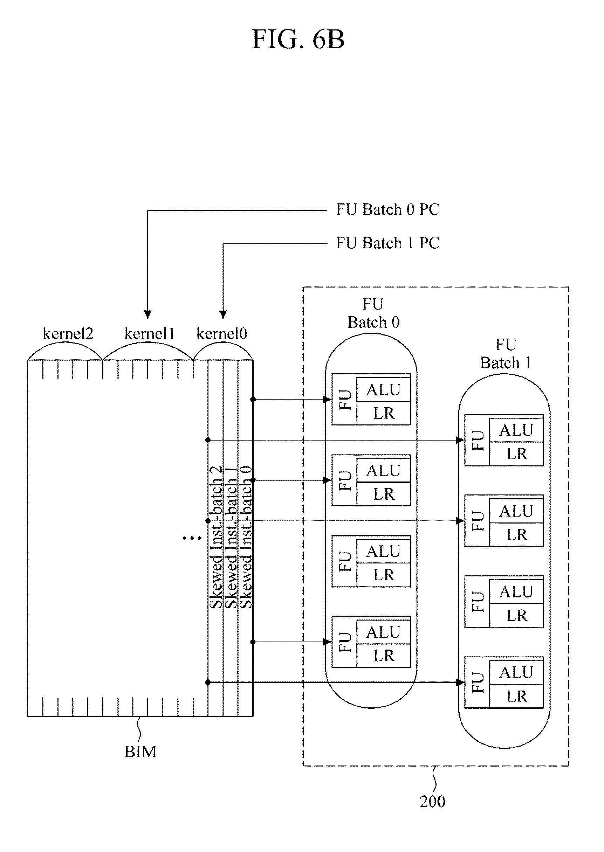

FIGS. 6A and 6B are drawings illustrating skewed instructions input in function unit batches. Referring to FIGS. 6A and 6B, with a processor 200 in accordance with an exemplary embodiment of the present disclosure, each function unit batch operates as a CGRA when executing one or more instruction batches that are input into each function unit batch, so that instructions in each instruction batch are input into function units in a staggered manner with respect to time. Here, the instructions may be skewed instructions, as discussed below, because the batch instructions executed by one batch function unit are changed over time.

Referring to FIG. 6A, the batch instructions are changed in the order of: A-B-D-E (cycle 10), C-B-D-E (cycle 17), C-F-D-E (cycle 21), C-F-G-E (cycle 25), and C-F-G-H (cycle 26). In this case, where A-B-D-E and C-F-G-H are batch instructions, three skewed instructions are input in such a manner that the skewed instructions are inserted between these two batch instructions. Accordingly, consecutive operations (in a pipeline form) are possible in a batch function unit. In other words, the skewed instructions can cause functional units in the batch unit to continuously form a pipeline and operate. In a particular example of skewed instructions, in case of a cycle 17, four instructions C, B, D, and E are inputted into four function units in a function unit batch. However, as shown in FIG. 5A, the instruction C is included in an instruction batch 1, and the remaining instructions B, D, and E belong to an instruction batch 0. As such, when at least one of instructions input at the same cycle belongs to a different instruction batch, the instructions input at the cycle are referred to as skewed instructions, and the processor 100 may require skewed instruction information to precisely input skewed instructions into the respective function unit batches.

Such skewed instruction information may be generated by a code generation apparatus in a compile stage. The processor 200 accesses a batch instruction memory (BIM) through a program counter (PC) of each function unit batch by use of skewed instruction information, to transmit a corresponding instruction to a corresponding function unit in a function unit batch.

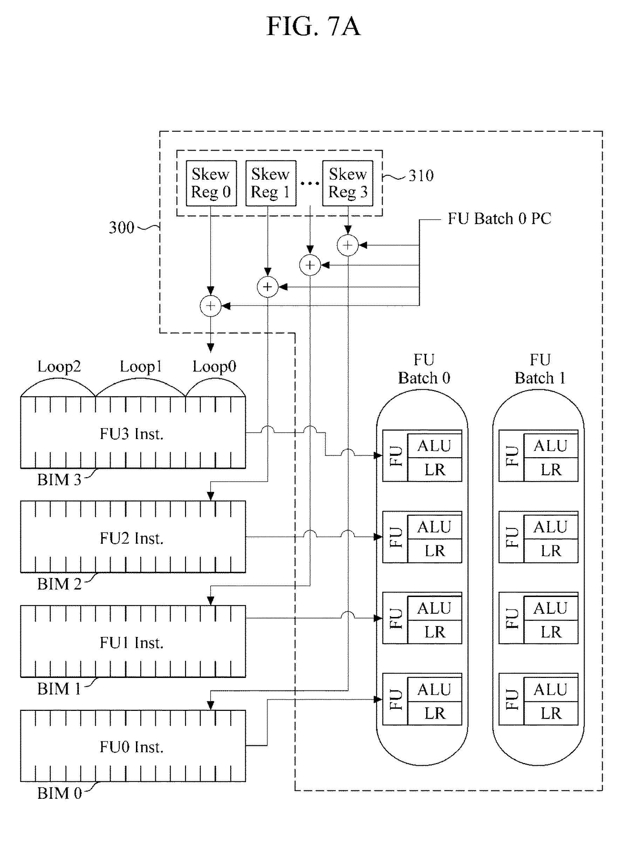

FIGS. 7A is a drawing illustrating a processor for input of skewed instructions in accordance with another exemplary embodiment of the present disclosure.

Referring to FIG. 7A, a processor 300 may include a central register file (not shown), one or more function unit batches, each including two or more function units, and two or more skewed registers 310 assigned to the function units included in each function unit batch.

The processor 300 in accordance with an exemplary embodiment of the present disclosure includes a skewed register 310 that corresponds to the function unit to more efficiently process the input of the skewed instructions described above. The processor 300 may generate a skewed instruction that is to be executed in one cycle by use of instructions stored in batch instruction memories BIM0, BIM1, BIM2, and BIM3 through the skewed register 310, and transmit the generated skewed instruction to the assigned function unit. Each function unit batch may access the batch instruction memory by use of a program counter (PC) thereof and a skewed register value assigned to each function unit.

In this case, the batch instruction memories BIM0, BIM1, BIM2, and BIM3 are configured to be separated into two or more in order to correspond to the respective function units as shown in FIG. 7A, to store instructions that are transmitted to the corresponding function units.

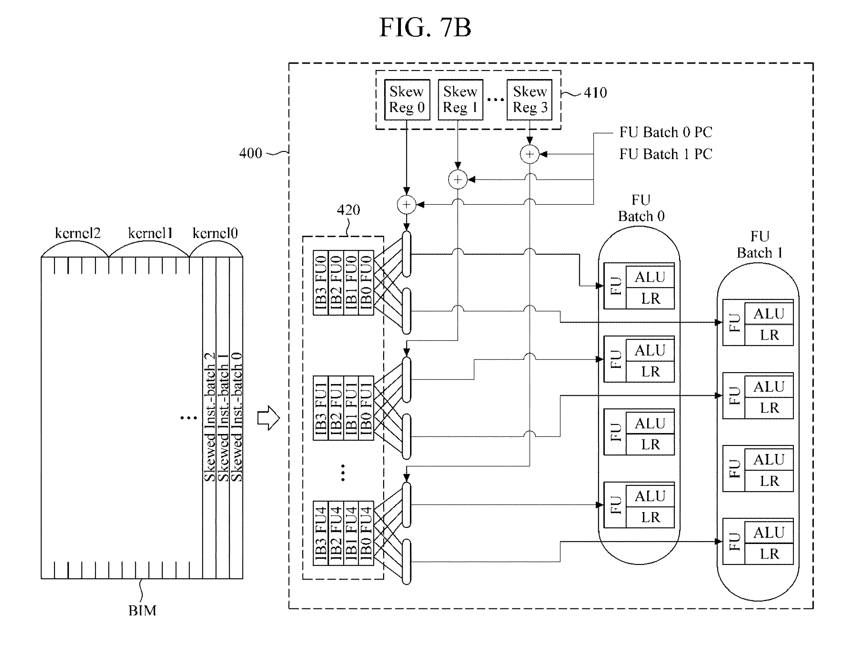

FIG. 7B is a drawing illustrating a processor for input of skewed instructions in accordance with still another exemplary embodiment of the present disclosure. A processor 400 may further include one or more kernel queues 420 in addition to the processor 300 of FIG. 7A. Without having a plurality of batch instruction memories BIM0, BIM1, BIM2, and BIM3 as in FIG. 7A, only one batch instruction memory BIM is used as shown in FIG. 7B.

Referring to FIG. 7B, the processor 400 may include two or more kernel queues 420 corresponding to function units of each function unit batch. The processor 400 may fetch at least some of instructions in a kernel of the batch instruction memory BIM, and store the fetched instruction in the kernel queue 420. In addition, each function unit batch reads a desired instruction by accessing a corresponding kernel queue 420 based on a PC thereof and a value of an assigned skewed register, to generate skewed instructions and transmit the generated skewed instructions to function units.

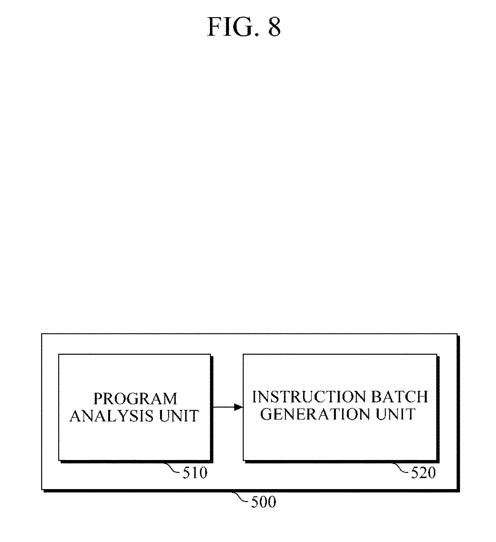

FIG. 8 is a block diagram illustrating a code generation apparatus for supporting a processor for batch thread processing in accordance with an exemplary embodiment of the present disclosure.

Referring to FIGS. 1 and 8, a code generation apparatus 500 includes a program analysis unit 510 and an instruction batch generation unit 520, to generate an instruction batch to support the processor 100 that is able to process batch threads.

The program analysis unit 510 analyzes a predetermined program to be processed, and generates a result of analysis. For example, the program analysis unit 510 may analyze a dependency between each data in a program and whether a conditional branch statement is present in a program.

The instruction batch generation unit 520 may generate one or more instruction batches that are to be executed in one or more function unit batches 120a, 120b, 120c, and 120d of the processor 100, based on the result of analysis. In this case, each instruction batch may include one or more instructions.

The instruction batch generation unit 520, based on dependency analysis information of the result of analysis, may generate a code allowing the processor 100 to operate as a CGRA by use of function units included in the function unit batches 120a, 120b, 120c, and 120d. Alternatively, the instruction batch generation unit 520 may generate a code for one or more instruction batches such that function units operate in a SIMT architecture in each function unit batch.

If analyzed that a conditional branch statement is present in a program, the instruction batch generation unit 520 allows an instruction that processes branches of the conditional branch statement to be included in different instruction batches, respectively. For example, when a first path is executed if a condition evaluates to 'true', and a second path is executed if a condition evaluates to 'false', the instruction batch generation unit 520 may allow an instruction for processing the first path and an instruction for processing the second path to be included in different instruction batches, respectively.

In addition, the code generation apparatus 500 may generate an instruction allowing one of the function unit batches to sequentially execute instruction batches, which are generated by the instruction batch generation unit 520 to process the branches, or allowing different function unit batches to execute the instruction batches, respectively. In this manner, a constraint associated with a conditional branch in a general SIMT or CGRA may be efficiently handled.

The instruction batch generation unit 520 may generate instruction batches such that total latency of each instruction batch is similar to each other. In addition, the instruction batch generation unit 520 may generate instruction batches in consideration of the number of input/output ports for the function unit batches 120a, 120b, 120c, and 120d to access the central register file 110. For example, the instruction batch generation unit 520 may generate instruction batches in a way to prevent the number of requests to read the central register file by a certain instruction batch from exceeding the number of read ports of a function unit batch that executes the certain instruction batch while preventing the number of requests to write by a certain instruction batch from exceeding the number of write ports of a function unit batch that executes the certain instruction batch.

In addition, the instruction batch generation unit 520 may generate instruction batches in a way to prevent the number of instructions included in each instruction batch from exceeding the number of function units included in each function unit batch. Referring to FIG. 5A, each of instruction batches 0 and 1 includes four instructions, and an instruction batch 2 includes three instructions, so that the number of instructions included in each instruction batch does not exceed four, that is, the number of function units included in each function unit batch 120a, 120b, 120c, and 120d.

Meanwhile, the instruction batch generation unit 520 may generate instruction batches such that a result of an operation for which a delay may occur in a certain instruction batch, for example, a result of an operation for which a block may occur is not used as a source in the certain instruction batch. For example, the instruction batch generation unit 520, during a scheduling, may allow an operation, for which a block occurs, to be disposed at the foremost location of an instruction batch, and allow a thread execution result of the operation to be used at the last order of the instruction batch. Alternatively, the instruction batch generation unit 520 may allow an operation, for which a block occurs, to be located at the last location of an instruction batch and to be processed prior to execution of a next instruction batch.

Meanwhile, the code generation apparatus 500 may generate an instruction allowing generated instruction batches to be equally input into all function unit batches, or allowing the generated instruction batches to be divided and input into two or more function unit batches, respectively.

The code generation apparatus 500 may store generated instruction batch information and various instruction information in a configuration memory or a cache memory. Meanwhile, the instruction batch generation unit 520 may generate skewed instruction information as described above with reference to FIGS. 6A and 6B.

The batch generation unit 520 has been described above. According to an exemplary embodiment, the batch generation unit 520 does not collect instructions available to be simultaneously executed, but generates a batch instruction by collecting instructions to be sequentially executed, and thus there are no difficulties in generating the batch instruction and it is possible to achieve an increased efficiency. Because multiple data can be simultaneously processed by multiple batch function units, such generation is effective to implement massively parallel data processing.

This is in contrast with Very Long Instruction Word (VLIW) and super-scalar architecture.

VLIW is an architecture in which a compiler creates a very long instruction word, which is composed of multiple instructions available to be simultaneously executed, and multiple functional units (or execution units) process the VLIW within a single clock cycle. VLIW architecture, in wide use in digital signal processing, often fails to find enough instructions that are available to be simultaneously executed, which may result in reduced efficiency. In addition, since all function units should access a central register file at the same time, hardware overhead of the central register file is disadvantageously increased.

Super-scalar is an architecture in which hardware finds instructions that are available for parallel execution at run time, and multiple execution units (or function units) process the found instructions. This architecture also has difficulties in finding instructions available to be simultaneously executed and may result in very complex hardware.

On the other hand, exemplary embodiments may simultaneously process multiple using multiple batch function units, which is effective to implement massively parallel data processing.

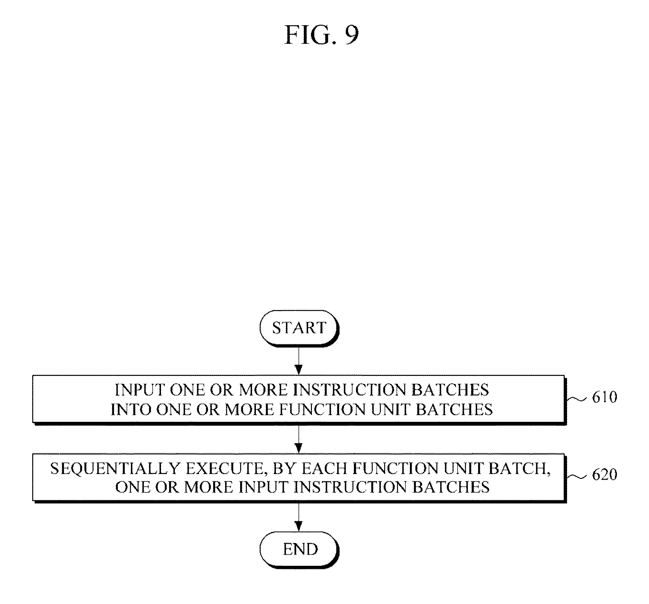

FIG. 9 is a flowchart showing a method of processing a batch thread using a processor for batch thread processing in accordance with an exemplary embodiment of the present disclosure. In FIG. 9, a method of processing a batch thread by use of the processor 100 in accordance with an exemplary embodiment of the present disclosure shown in FIG. 1 is illustrated. Details of the batch thread processing have been described through FIGS. 1 to 8, and hereinafter, the batch thread processing will be described in brief.

First, the processor 100 may input one or more instruction batches generated by the code generation apparatus into one or more function unit batches 120a, 120b, 120c, and 120d (610). In this case, the processor 100 may allocate all the generated instruction batches in units of threads and input the allocated instruction batches into the function unit batches 120a, 120b, 120c, and 120d. That is, all the instruction batches are equally input into each of the function unit batches 120a, 120b, 120c, and 120d so as to be sequentially executed while each function unit batch processes some of all the thread groups that need to be processed, which in turn, the processor 100 operates as an SIMT.

Alternatively, instruction batches may be divided and input into the function unit batches 120a, 120b, 120c, and 120d. For example, when the number of generated instruction batches is four, the four instruction batches may be input into the function unit batches 120a, 120b, 120c, and 120d, respectively, such that threads are processed in an MIMT scheme. Alternatively, the same two instruction batches are input into two function unit batches 120a and 120b, and the remaining two instruction batches are input into the remaining two function unit batches 120c and 120d such that an SIMT and an MIMT are used in combination with each other.

As the instruction batches are divided and input into the function unit batches 120a, 120b, 120c, and 120d, instruction batches that process a conditional branch are input into different function unit batches 120a, 120b, 120c, and 120d, thereby enhancing the efficiency of processing the conditional branch. In addition, because the respective function unit batches 120a, 120b, 120c, and 120d independently operate, even if a block occurs in one of the function unit batches, the remaining function unit batches may perform thread processing regardless of the block.

Thereafter, the respective function unit batches 120a, 120b, 120c, and 120d may sequentially execute the input one or more instruction batches (620). In this case, the respective function unit batches 120a, 120b, 120c, and 120d may execute each instruction batch while switching each thread with respect to the input instruction batch in an interleaved scheme described above.

Meanwhile, if a block occurs at a certain thread while the function unit batches 120a, 120b, 120c, and 120d are executing a predetermined thread group with respect to a certain instruction batch, and the block is not released until a thread of the predetermined thread group is executed with respect to another instruction batch having a dependency on the instruction batch, at which the block occurs, the function unit batches 120a, 120b, 120c, and 120d do not execute the thread, at which the block occurs, with respect to the other instruction batch such that the thread, at which the block occurs, is executed at the last point of time terminating the execution of all the threads of the predetermined thread group.

In addition, if a conditional branch occurs when the function unit batches 120a, 120b, 120c, and 120d are executing a predetermined thread group with respect to a certain instruction batch, the thread group is divided into two or more sub-thread groups and the divided sub-thread groups may be executed with respect to branches for the conditional branch, respectively. In addition, when the conditional branch for the branches ends and the branches merge, the divided sub-thread groups are merged into the original thread group.

The functions of the exemplary embodiments may be embodied as computer-readable codes in a computer-readable recording medium. The computer-readable recording medium includes all types of recording media in which computer-readable data are stored. Examples of the computer-readable recording medium include a ROM, a RAM, a CD-ROM, a magnetic tape, a floppy disk, and an optical data storage. Further, the recording medium may be implemented in the form of carrier waves such as those used in Internet transmission. In addition, the computer-readable recording medium may be distributed to computer systems over a network, in which computer-readable codes may be stored and executed in a distributed manner.

As will also be understood by the skilled artisan, the exemplary embodiments may be implemented by any combination of software and/or hardware components, such as a Field Programmable Gate Array (FPGA) or Application Specific Integrated Circuit (ASIC), which performs certain tasks. A unit or module may advantageously be configured to reside on the addressable storage medium and configured to execute on one or more processors or microprocessors. Thus, a unit or module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and units may be combined into fewer components and units or modules or further separated into additional components and units or modules.

A number of exemplary embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A processor comprising:
a central register file; and
a first function unit batch including a first plurality of function units, a first input port through which the first plurality of function units access the central register file, and a first output port through which the first plurality of function units access the central register file; and
a second function unit batch including a second plurality of function units, a second input port through which the second plurality of function units access the central register file, and a second output port through which the second plurality of function units access the central register file,
wherein the first function unit is configured to receive a first instruction batch including one or more first instructions of a program and sequentially execute the one or more first instructions and wherein the second function unit is configured to receive a second instruction batch including one or more second instructions of the program and sequentially execute the one or more second instructions.

2. The processor of claim 1, wherein the first function unit batch further includes one or more first local register files configured to store input/output data of the first plurality of function units, and
wherein the second function unit batch further includes one or more second local register files configured to store input/output data of the second plurality of function units.

3. The processor of claim 2, wherein the first function unit batch is configured to operate as a coarse grained reconfigurable array,CGRA, by use of the first plurality of function units, connections between the first plurality of function units, and the one or more first local register files, and
wherein the second function unit batch is configured to operate as a CGRA by use of the second plurality of function units, connections between the second plurality of function units, and the one or more second local register files.

4. The processor of any preceding claim, wherein a structure of the first function unit batch is the same as a structure of the second function unit batch.

5. The processor of any preceding claim, wherein the first function unit batch is configured to execute, during a certain cycle, at least one of the at least one or more second instructions by use of skewed instruction batch information, and
wherein the second function unit batch is configured to execute, during a certain cycle, at least one of the at least one or more first instructions by use of skewed instruction batch information.

6. The processor of any preceding claim, wherein the first instruction batch comprises a first plurality of instruction batches and the second instruction batch comprises a second plurality of instruction batches, and
wherein the first function unit batch, upon receiving the first plurality of instruction batches, is configured to sequentially execute each of the first plurality of instruction batches in a unit of a thread group including one or more threads and the second function unit batch, upon receiving the second plurality of instruction batches, is configured to sequentially execute each of the second plurality of instruction batches in the unit of the thread group.

7. The processor of claim 6, wherein the first function unit batch and the second function unit batch are configured to execute, if a block occurs at a certain thread during execution of the thread group with respect to an instruction batch and the block continues to a point when executing the thread group with respect to another instruction batch having a dependency on the instruction batch, executes the certain thread, at which the block occurs, with respect to the other instruction batch in a last order in the thread group, or wherein the first function unit batch and the second function unit batch are configured to, if a conditional branch occurs during execution of the thread group with respect to an instruction batch, divide the thread group into two or more sub-thread groups and execute the divided two or more sub-thread groups with respect to branches for the conditional branch, respectively, and wherein the first function unit batch and the second function unit batch are configured to, if the branches for the conditional branch end and merge, merge the divided two or more sub-thread groups to the thread group and execute the thread group.

8. The processor of any preceding claim further comprising:
skewed registers assigned to each of the first plurality of function units and the second plurality of function units,
wherein a skewed instruction that is to be executed during a certain cycle is generated by use of an instruction that is stored in a batch instruction memory through one of the skewed registers, and the generated skewed instruction is transmitted to each function unit assigned to the one of the skewed registers.

9. The processor of claim 8, wherein the batch instruction memory is provided in two units thereof to correspond to each of the first plurality of function units and the second plurality of functions units, so as to store an instruction that is to be transmitted to a function unit corresponding to the batch instruction memory.

10. The processor of claim 8 or 9, further comprising one or more kernel queues that store at least some of instructions fetched from a kernel of the batch instruction memory,
wherein a skewed instruction that is to be executed during a certain cycle is generated by use of the instruction stored in each of the kernel queues through the skewed register, and the generated skewed instruction is transmitted to the each assigned function unit.

11. An apparatus for generating a code, the apparatus comprising:
a program analysis unit configured to analyze a predetermined program that is to be processed in a processor according to any preceding claim; and
an instruction batch generation unit configured to generate a first instruction batch and a second instruction batch, each including one or more instructions, which are to be respectively executed in the first function unit batch and the second function unit batch, based on a result of the analysis.

12. The apparatus of claim 11, wherein the instruction batch generation unit, if a conditional branch statement exists in the program as the result of the analysis, allows instructions that process branches of the conditional branch statement to be included in different instruction batches, or wherein the instruction batch generation unit generates the first instruction batch and the second instruction batch to have similar latencies among one another.

13. The apparatus of claim 11 or 12, wherein the instruction batch generation unit is adapted to generate the first instruction batch and the second instruction batch based on a number of read ports and a number of write ports of the first function unit batch or the second function unit batch in which the first instruction batch and the second instruction batch is to be executed or wherein the instruction batch generation unit is adapted to generate the first instruction batch and the second instruction batch to minimize a number of read requests and a number of write requests of the first instruction batch and the second instruction batch with respect to a central register file from exceeding the number of read ports and the number of write ports of the first function unit batch or the second function unit batch in which the first instruction batch and the second instruction batch is to be executed, or wherein the instruction batch generation unit is adapted to generate the first instruction batch and the second instruction batch to minimize a the number of instructions included in each instruction batch from exceeding the number of function units included in the first function unit batch or the second function unit batch in which the first instruction batch and the second instruction batch is to be executed, or wherein the instruction batch generation unit is adapted to generate the first instruction batch and the second instruction batch to minimize delay in a certain instruction batch from being used as a source in the certain instruction batch.

14. A method of processing a batch thread by a processor, the method comprising:
inputting a first instruction batch and a second instruction batch generated by a code generation apparatus into a first function unit batch including a first plurality of function units and a second function unit batch including a second plurality of function units; and
sequentially executing, by first function unit batch and the second function unit batch, the first instruction batch and the second instruction batch, respectively.

15. The method of claim 14, wherein in the inputting of one or more instruction batches, the first instruction batch and the second instruction batch are input in units of thread groups.

16. The method of claim 15, wherein in the executing the first instruction batch and the second instruction batch, the thread groups are executed with respect to each instruction batch while switching each thread, included in the thread groups, in an interleaved fashion, or wherein in the executing of the first instruction batch and the second instruction batch, if a block occurs at a certain thread during execution of the thread group with respect to an instruction batch and the block continues to a point when executing the thread group with respect to another instruction batch having a dependency on the instruction batch, the certain thread, at which the block occurs, is executed with respect to the other instruction batch in a last order in the thread group, or wherein in the executing the first instruction batch and the second instruction batch, if a conditional branch occurs during execution of the thread group with respect to an instruction batch, the thread group is divided into two or more sub-thread groups and the divided two or more sub-thread groups are executed with respect to branches for the conditional branch, respectively.

17. The method of claim 16, wherein in the executing of the first instruction batch and the second instruction batch, if the branches for the conditional branch end and merge, the divided two or more sub-thread groups are merged to the thread group and the thread group is executed.
